# EUROPÄISCHE PATENTSCHRIFT

(11) **EP 0 860 327 B1**
(45) Veröffentlichungstag und Bekanntmachung des Hinweises auf die Patenterteilung: **18.07.2001**
(21) Anmeldenummer: 97118695.2
(22) Anmeldetag: 28.10.1997
(51) Int. Cl.: B60R 9/04

(54) **Befestigungsvorrichtung**
Fastening device
Dispositif de montage

(30) Priorität: 20.02.1997 DE 19706611
(43) Veröffentlichungstag der Anmeldung: 26.08.1998
(73) Patentinhaber: JAC Products Deutschland GmbH, 42285 Wuppertal (DE)
(72) Erfinder: Evels, Brigitte, 42119 Wuppertal (DE); Grätz, Ronald, 45276 Essen (DE)

(56) Entgegenhaltungen:
- EP-A- 0 780 267
- DE-A- 2 939 671
- DE-A- 3 524 558
- DE-A- 3 932 193
- DE-A- 4 220 842
- DE-C- 3 736 028

## Beschreibung

Die Erfindung bezieht sich auf eine Befestigungsvorrichtung, insbesondere zum Befestigen eines sich auf dem Dachblech eines Kraftfahrzeugs unter Zwischenfügung einer elastischen Unterlage abstützenden Relingfußes einer Dachreling, mit einem beidendig ein Außengewinde aufweisenden Befestigungsbolzen, der mit einem Endbereich in eine im Relingfuß ausgebildete Gewindebohrung eingreift und mit dem anderen zum Aufschrauben einer Spannmutter bestimmten Endbereich eine Bohrung in einem vom Dachblech überspannten Spriegel des Kraftfahrzeugs durchsetzt, wobei über den Befestigungsbolzen ein durch die Bohrung im Dachblech passendes, sich auf den Spriegel abstützendes Höhen-Ausgleichselement geschoben ist, das einen rohrförmigen Ansatz zum Umschliessen des Befestigungsbolzens aufweist.

Zur Befestigung von Aufbauten, wie Dachrelings auf Fahrzeugdächern werden (vgl. DE 29 39 671 A1) Bolzen eingesetzt, die einen im Durchmesser verdickten Bund aufweisen, dessen Länge auf das Maß abgestimmt ist, welches im allgemeinen zwischen dem Spriegel, Dachrahmen oder dgl. und der sich gegen das obere Ende des Bundes abstützenden Auflagefläche des Aufbaus einzuhalten ist. Das Maß zwischen dem Dachrahmen und der Auflagefläche des Aufbaus wird vorgegeben durch den Abstand zwischen dem Dachrahmen und dem diesen überspannenden Dachblech des Fahrzeugs. In der Praxis ist es aber nun so, daß sich der Abstand zwischen dem Dachrahmen und dem Dachblech nicht immer innerhalb eines engen Toleranzbereichs einhalten läßt, was Probleme bei der Befestigung eines Aufbaus mit sich bringt. Wenn der Abstand zu gering ist, weist der Bund des Bolzens praktisch Übermaß auf, was zur Folge hat, daß die an der Auflagefläche des Aufbaus üblicherweise angeordnete elastische Unterlage nicht zur dichtenden Anlage auf dem Dachblech des Fahrzeugs gelangt. Wenn anderseits der Abstand zu groß ist, ist die Länge des Bolzenbunds nicht mehr ausreichend, um zu verhindern, daß das Dachblech beim Verspannen des Aufbaus gegen den Dachrahmen eine das Erscheinungsbild des Fahrzeugs äußerst negativ beeinträchtigende Delle erhält.

Zur Vermeidung der aufgezeigten Mängel ist bei einer durch die DE 35 24 558 A1 bekanntgewordenen Befestigungsvorrichtung, von der die Erfindung ausgeht, ein Höhen-Ausgleichselement zum Ausgleichen von Toleranzen vorgesehen, das einen rohrförmigen Ansatz zum Umschließen eines Befestigungsbolzens aufweist und sich auf dem Spriegel abstützt. Bei dieser bekannten Befestigungsvorrichtung ist es erforderlich, daß unter Zuhilfenahme eines Schraubwerkzeugs eine Abstützung des Höhen-Ausgleichselements auf dem Spriegel jeweils überprüft und im Regelfall auch eingestellt werden muß. Stützt sich aber das Höhen-Ausgleichselement auf dem Spriegel ab, kann auf die zwischen der Dachhaut und dem Stützfuß angeordnete elastische Unterlage kein eine zuverlässige Abdichtung gewährleistender Anpreßdruck ausgeübt werden. Es ist daher erforderlich, das Höhen-Ausgleichselement zunächst in eine Abstützlage am Spriegel zu bringen und danach wieder zurückzubewegen, um ein Klemmaß zu schaffen, was allerdings nicht unter Sichtkontrolle zu bewerkstelligen und daher unsicher ist.

Aufgabe der vorliegenden Erfindung ist es, eine Befestigungsvorrichtung der eingangs genannten Art so zu gestalten, daß sich ein Toleranzausgleich auftretender Karosserietoleranzen schnell und einfach realisieren läßt, wobei noch weiterhin angestrebt wird, daß die elastische Unterlage unter dem Relingfuß eine, eine zuverlässige Abdichtung gewährleistende Vorspannung erhält.

Zur Lösung dieser Aufgabe ist erfindungsgemäß vorgesehen, daß das Höhen-Ausgleichselement mit sich auf den Spriegel abstützenden Montagefüßen und zumindest einen gegenüber diesen kürzeren Stützfuß ausgebildet ist, daß auf dem rohrförmigen Ansatz ein Klemmittel angeordnet ist, um das Höhen-Ausgleichselement gegen ein axiales Verschieben auf dem Befestigungsbolzen zu sichern, daß die Montagefüße derart ausgebildet oder am Höhen-Ausgleichselement angeordnet sind, daß sie beim Anziehen der Spannmutter und dadurch bewirktes Heranziehen des zumindest einen Stützfußes gegen den Spriegel auszuweichen vermögen und daß der Höhenunterschied zwischen den Montagefüßen und dem zumindest einen Stützfuß dem Maß entspricht, welches für die Vorspannung der elastischen Unterlage zwischen dem Dachblech und dem Relingfuß erforderlich ist.

Beim Gegenstand der Erfindung wird demnach über das Höhen-Ausgleichselement, bei dem es sich um ein einfaches Bauteil aus Kunststoff oder Metall handeln kann, und über das daran angreifende Klemmittel ein den Anforderungen genügender Toleranzausgleich ohne aufwendige Manipulastion erzielt. Die Befestigung eines Relingfußes erfolgt in gewohnter Weise durch die auf den Bolzen aufzudrehende Spannschraube, durch deren Anziehen der zumindest eine Stützfuß des Höhen-Ausgleichselements gegen die Spriegeloberseite gezogen und verspannt wird. Insbesondere ist die Abdichtung gewährleistet, sobald die Spannmutter mit einem vorgegebenen Drehmoment angezogen ist.

Eine Weiterbildung der Erfindung sieht vor, daß die Montagefüße in Richtung zum Spriegel schräg nach außen verlaufend am Höhen-Ausgleichselement angeordnet sind. Damit können die Montagefüße sich leicht nach außen drücken, also zur Seite hin ausweichen, wenn das Höhen-Ausgleichselement an die Oberseite des Spriegels mittels der Spannmutter herangezogen wird.

Der zumindest eine Stützfuß weist bevorzugt eine den rohrförmigen Ansatz mit Abstand umgebende Buchsenform auf, wobei der Buchsenrand zur Abstützung auf der Spriegeloberseite bestimmt ist. Auf diese Weise erhält das Höhen-Ausgleichselement eine hoch belastbare Festigkeit.

Das Höhen-Ausgleichselement soll vor der Relingfußmontage von Hand auf den Befestigungsbolzen aufschiebbar sein und auch solange axial auf dem Befestigungsbolzen verschiebbar sein bis der Relingfuß auf der elastischen Auflage aufsitzt. Um dies zu vereinfachen sieht eine Ausgestaltung der Erfindung vor, daß der rohrförmige Ansatz zumindest eine axiale, frei auslaufende Aussparung aufweist. Die Aussparung ermöglicht ein gewisses Aufspreizen des rohrförmigen Ansatzes bei der Schiebebewegung.

Eine wichtige Weiterbildung der Erfindung besteht darin, daß der rohrförmige Ansatz mit einem Außengewinde zum Aufschrauben einer als Klemmittel dienenden Gewindemutter ausgebildet ist. Durch Aufschrauben der Gewindemutter wird der rohrförmige Ansatz gegenüber dem Befestigungsbolzen verspannt und damit in axialer Richtung festgelegt. Es kann sinnvoll sein, zwischen dem Befestigungsbolzen und dem rohrförmigen Ansatz gegeneinander wirkende Mittel wie Nut/Feder als Verdrehschutz vorzusehen.

Eine andere Ausgestaltung der Erfindung sieht vor, daß der rohrförmige Ansatz zum freien Ende hin konisch verläuft und von einem einstückig mit der Spannmutter ausgebildeten Buchsenkörper mit entsprechendem Innenkonus aufgenommen ist.

Gemäß einer sinnvollen Weiterbildung der Erfindung sollte noch vorgesehen sein, daß der Schaft des Bolzens mit einer Verzahnung, Rändelung oder dgl. ausgebildet ist, zwecks Vereinfachung der Axialsicherung.

Ausführungsbeispiele der Erfindung werden im folgenden anhand der Zeichnungen näher erläutert, und es zeigen:
- Fig. 1: eine Relingfuß-Anordnung auf einem Fahrzeugdach in einer Vormontage-Position,
- Fig. 2: die Relingfuß-Anordnung nach Fig. 1 nach Montageabschluß,
- Fig. 3: eine Relingfuß-Anordnung auf einem Fahrzeugdach in einer Vormontage-Position und in einer gegenüber Fig. 1 abgewandelten Ausführungsform und
- Fig. 4: die Relingfuß-Anordnung nach Fig. 3 nach Montageabschluß.

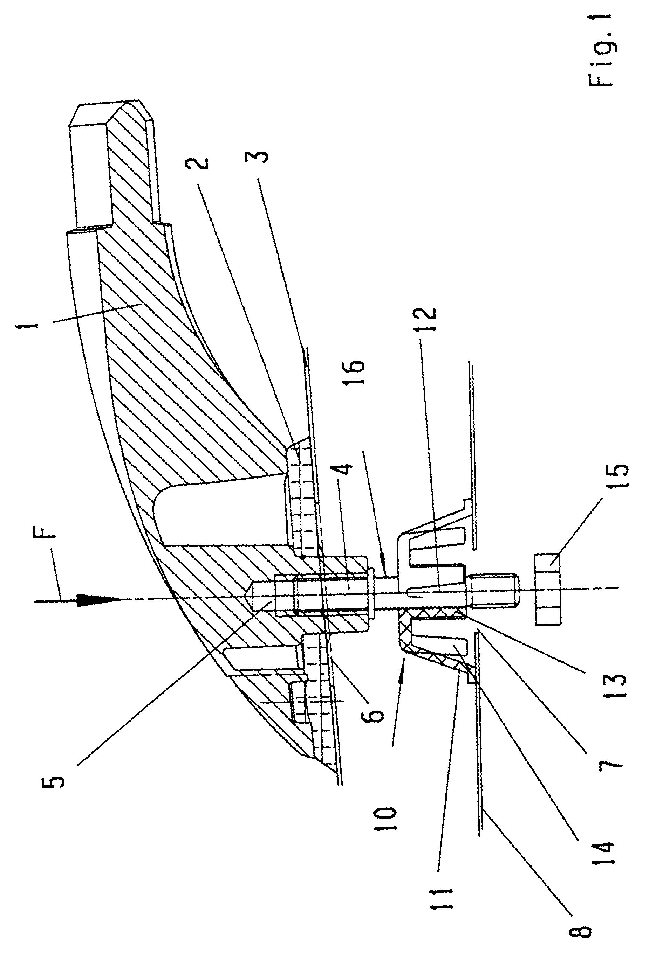

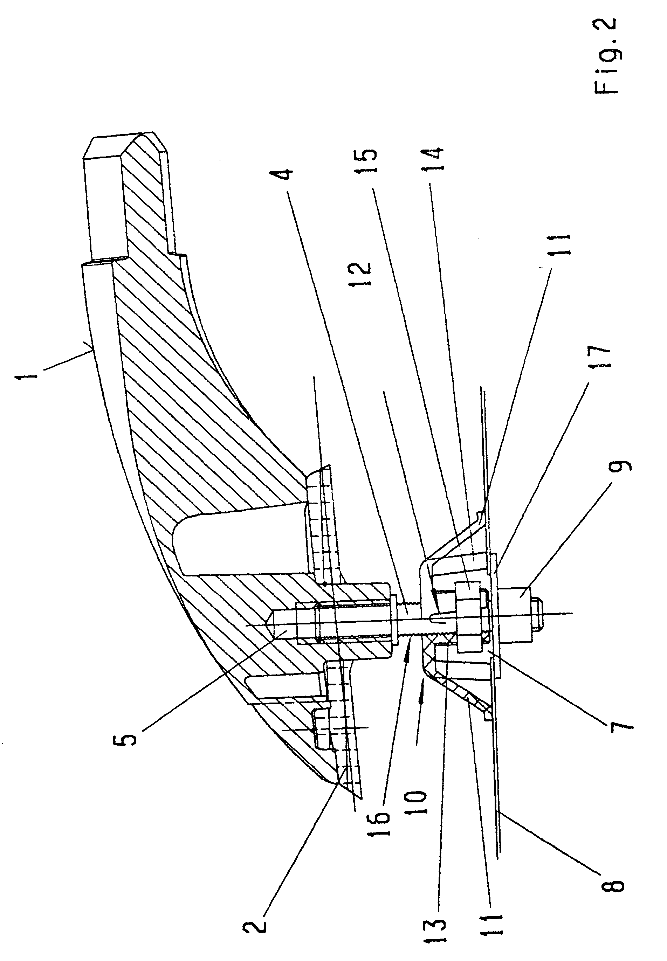

Fig. 1 zeigt einen Relingfuß einer nicht näher dargestellten Dachreling, wobei der Relingfuß 1 unter Zwischenfügung einer elastischen Unterlage 2 auf dem Dachblech 3 eines Kraftfahrzeugs abgestützt ist. Ein Befestigungsbolzen 4 ist mit einem ein Außengewinde aufweisenden Endbereich in eine mit Innengewinde versehene Bohrung 5 des Relingfußes 1 eingeschraubt. Der Befestigungsbolzen 4 durchsetzt eine Öffnung 6 im Dachblech 3 und eine Öffnung 7 in einem vom Dachblech 3 überspannten Spriegel 8, bei dem es sich aber auch um einen Dachrahmen oder eine sonstige Tragestruktur handeln kann. Das aus der Öffnung 7 im Spriegel 8 heraustretende freie Endes des Befestigungsbolzens 4 weist ein zum Aufschrauben einer Spannmutter 9 (Fig. 2) dienendes Gewinde auf.

Auf den unteren Endbereich des Befestigungsbolzens 4 ist ein Höhen-Ausgleichselement 10 aufgeschoben, welches zusammen mit dem Befestigungsbolzen 4 durch die Öffnung 6 im Dachblech 3 hindurchgesteckt ist. Das Höhen-Ausgleichselement 10 kommt mit daran angeformten Montagefüßen 11 auf der Spriegeloberseite zu stehen und wird durch die aufgebrachte Handkraft F bis in die dargestellte Vormontageposition axial auf dem Befestigungsbolzen 4 entlang verschoben. Vereinfacht wird dies durch die im Höhen-Ausgleichselement 10 eingebrachten Aussparungen 12, die ein Aufspreizen ermöglichen.

Das Höhen-Ausgleichselement 10 weist einen, den Befestigungsbolzen 4 umschließenden rohrförmigen Ansatz 13, die erwähnten Montagefüße 11 sowie Stützfüße 14 auf. Anstelle mehrerer Stützfüße 14 kann auch ein einzelner, den rohrförmigen Ansatz 13 mit Abstand umgebender Stützfuß 14 in Buchsenform vorgesehen sein. Die Montagefüße 11 sind schräg gestellt am Höhen-Ausgleichselement 10 angeordnet, so daß sie bei einer Verschiebung des Höhen-Ausgleichselements 10 längs des Befestigungsbolzens 4 radial zur Seite hin ausweichen können.

Nach dem Aufsetzen des Relingfußes 1 mit Unterlage 2 auf das Dachblech 3 ruhen die Montagefüße 11 auf der Spriegeloberseite, wie in Fig. 1 gezeigt. In dieser Position wird das Höhen-Ausgleichselement 10 in axialer Richtung unverschiebbar am Befestigungsbolzen 4 mittels eines Spannmittels festgelegt. Beim Ausführungsbeispiel nach Fig. 1 und 2 ist als Spannmittel eine Gewindemutter 15 vorgesehen, die auf ein am rohrförmigen Ansatz 13 angeformtes Außengewinde aufschraubbar ist. Beim Aufschrauben der Gewindemutter 15 werden die Aussparungen 12 so zusammengedrückt, daß eine Verschiebung auf dem Befestigungsbolzen 4 nicht mehr möglich ist, was noch durch eine am Befestigungsbolzen 4 vorgesehene Verzahnung 16 oder dgl. unterstützt wird.

Für die endgültige Montage der Dachreling (vgl. Fig. 2) ist auf das unterseitige Gewinde des Befestigungsbolzens 4 die erwähnte Spannmutter 9 aufzuschrauben. Die Spannmutter 9 wirkt gegen eine Unterlegscheibe 17 und zieht den Relingfuß 1 gegen die Unterlage 2. Durch die Längsbewegung des Befestigungsbolzens 4 mit dem daran fest sitzenden Höhen-Ausgleichselement 10 werden die Montagefüße 11 seitlich weggedrückt, und zwar so lange, bis die Stützfüße 14 auf der Oberseite des Spriegels 8 fest zu stehen kommen. Der Höhenunterschied zwischen den Montagefüßen 11 und den Stützfüßen 14 entspricht der Vorspannung der Unterlage 2 zum Dachblech 3.

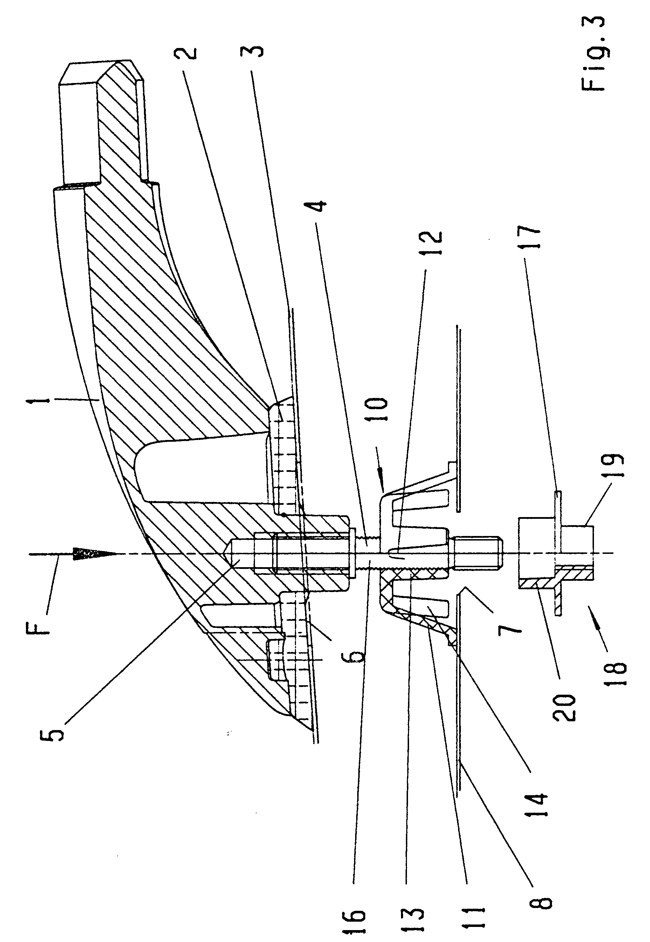

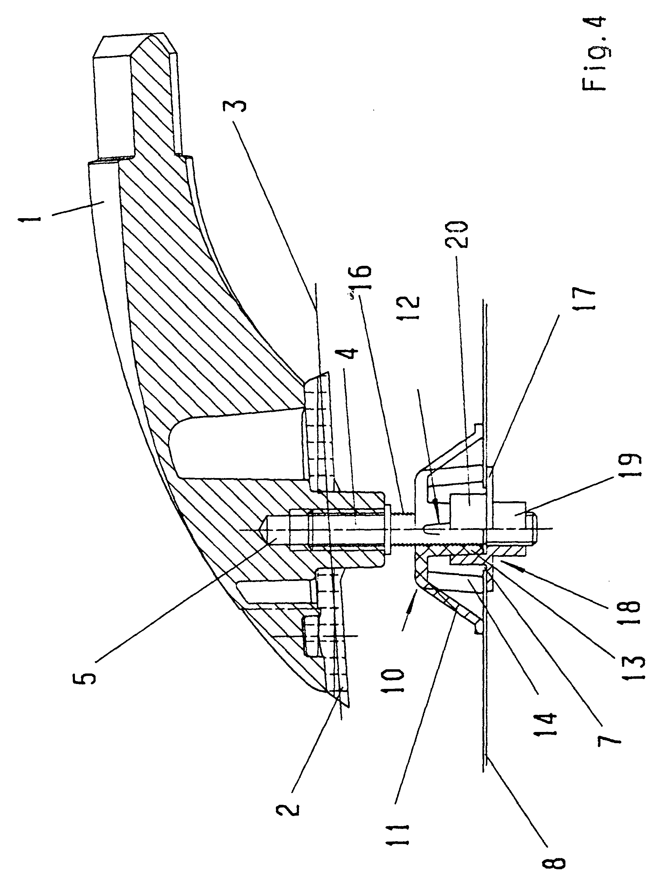

Beim Ausführungsbeispiel nach Fig. 3 und 4 ist bei mit Fig. 1 und 2 gleichwirkendem Lösungsprinzip auf ein Außengewinde am rohrförmigen Ansatz 13 und auf eine separate Gewindemutter verzichtet worden. Zum Einsatz kommt hier eine sogenannte Kombinationsmutter 18, die einen auf den Befestigungsbolzen 4 aufschraubbaren Gewindeteil 19, eine Unterlegscheibe 17 und einen Buchsenkörper 20 umfaßt. Die der Befestigung dienende Kombinationsmutter 18 erzeugt durch den Druck des Anziehens zum einen das Wegschwenken der Montagefüße 11 und ein gleichzeitiges Befestigen durch Zusammendrücken der für die Montage des Höhen-Ausgleichselements 10 dienenden Aussparungen 12 mittels Schrägen. Der rohrförmige Ansatz 13 verläuft also zum freien Ende hin konisch und wird vom Buchsenkörper 20, der einen entsprechenden Innenkonus aufweist aufgenommen.

## Patentansprüche

1. Befestigungsvorrichtung, insbesondere zum Befestigen eines sich auf dem Dachblech (3) eines Kraftfahrzeugs unter Zwischenfügung einer elastischen Unterlage (2) abstützenden Relingfußes (1) einer Dachreling, mit einem beidendig ein Außengewinde aufweisenden Befestigungsbolzen (4), der mit einem Endbereich in eine im Relingfuß (1) ausgebildete Gewindebohrung (5) eingreift und mit dem anderen zum Aufschrauben einer Spannmutter (9) bestimmten Endbereich eine Bohrung (6) im Dachblech (3) und eine Bohrung (7) in einem vom Dachblech (3) überspannten Spriegel (8) des Kraftfahrzeugs durchsetzt, wobei über den Befestigungsbolzen (4) ein durch die Bohrung (6) im Dachblech (3) passendes, sich auf den Spriegel abstützendes Höhen-Ausgleichselement (10) geschoben ist, das einen rohrförmigen Ansatz (13) zum Umschliessen des Befestigungsbolzens (4) aufweist, dadurch gekennzeichnet, daß das Höhen-Ausgleichselement (10) mit sich auf den Spriegel (8) abstützenden Montagefüßen (11) und zumindest einen gegenüber diesen kürzeren Stützfuß (14) ausgebildet ist, daß auf dem rohrförmigen Ansatz (13) ein Klemmittel angeordnet ist, um das Höhen-Ausgleichselement (10) gegen ein axiales Verschieben auf dem Befestigungsbolzen (4) zu sichern, daß die Montagefüße (11) derart ausgebildet oder am Höhen-Ausgleichselement (10) angeordnet sind, daß sie beim Anziehen der Spannmutter (9) und dadurch bewirktes Heranziehen des zumindest einen Stützfußes (14) gegen den Spriegel (8) auszuweichen vermögen und daß der Höhenunterschied zwischen den Montagefüßen (11) und dem zumindest einen Stützfuß (14) dem Maß entspricht, welches für die Vorspannung der elastischen Unterlage (2) zwischen dem Dachblech (3) und dem Relingfuß (1) erforderlich ist.

2. Befestigungsvorrichtung nach Anspruch 1, dadurch gekennzeichnet, daß die Montagefüße (11) in Richtung zum Spriegel (8) schräg nach außen verlaufend am Höhen-Ausgleichselement (10) angeordnet sind.

3. Befestigungsvorrichtung nach wenigstens einem der vorangegangenen Ansprüche, dadurch gekennzeichnet, daß der zumindest eine Stützfuß (14) eine den rohrförmigen Ansatz (13) mit Abstand umgebende Buchsenform aufweist.

4. Befestigungsvorrichtung nach wenigstens einem der vorangegangenen Ansprüche, dadurch gekennzeichnet, daß der rohrförmige Ansatz (13) zumindest eine axiale, frei auslaufende Aussparung (12) aufweist.

5. Befestigungsvorrichtung nach wenigstens einem der vorangegangenen Ansprüche, dadurch gekennzeichnet, daß der rohrförmige Ansatz (13) mit einem Außengewinde zum Aufschrauben einer als Klemmittel dienenden Gewindemutter (15) ausgebildet ist.

6. Befestigungsvorrichtung nach wenigstens einem der vorangegangenen Ansprüche, dadurch gekennzeichnet, daß der rohrförmige Ansatz (13) zum freien Ende hin konisch verläuft und von einem einstückig mit der Spannmutter (9) ausgebildeten Buchsenkörper (20) mit entsprechendem Innenkonus aufgenommen ist.

7. Befestigungsvorrichtung nach wenigstens einem der vorangegangenen Ansprüche, dadurch gekennzeichnet, daß der Schaft des Befestigungsbolzens (4) mit einer Verzahnung (16), Rändelung oder dgl. ausgebildet ist.

## Claims

1. Fastening device, in particular for the fastening of a roof-rail foot (1) which is supported on the roof panel (3) of a motor vehicle with an elastic base (2) inserted in between, having a fastening bolt (4) which has an external thread at both ends and, with one end region, engages in a threaded pole (5) formed in the rail foot (1) and, with the other end region, which is intended for the screwing on of a clamping nut (9), passes through a hole (6) in the roof panel (3) and a hole (7) in a bow (8) of the motor vehicle, which bow is spanned by the roof panel (3), a height-equalizing element (10) being slid over the fastening bolt (4), which element fits through the hole (6) in the roof panel (3), is supported on the bow and has a tubular projection (13) for enclosing the fastening bolt (4), characterized in that the height-equalizing element (10) is formed with mounting feet (11) which are supported on the bow (8) and at least one supporting foot (14) which is shorter than the said mounting feet, in that a clamping means is arranged on the tubular projection (13) so as to secure the height-equalizing element (10) against axial displacement on the fastening bolt (4), in that the mounting feet (11) are formed or arranged on the height-equalizing element (10) in such a manner that they are able to yield as the clamping nut (9) is being tightened causing the at least one supporting foot (14) to be pulled against the bow (8), and in that the difference in height between the mounting feet (11) and the at least one supporting foot (14) corresponds to dimensions required for pre-stressing of the elastic base (2) between the roof panel (3) and the rail foot (1).

2. Fastening device according to Claim 1, characterized in that the mounting feet (11) are arranged on the height-equalizing element (10) in a manner such that they run obliquely outwards in the direction of the bow (8).

3. Fastening device according to at least one of the preceding claims, characterized in that the at least one supporting foot (14) has a bushing shape which surrounds the tubular projection (13) at a distance.

4. Fastening device according to at least one of the preceding claims, characterized in that the tubular projection (13) has at least one axial cut-out (12) which opens out freely.

5. Fastening device according to at least one of the preceding claims, characterized in that the tubular projection (13) is formed with an external thread for the screwing on of a threaded nut (15) serving as clamping means.

6. Fastening device according to at least one of the preceding claims, characterized in that the tubular projection (13) runs conically towards the free end and is held by a bushing body (20) having a corresponding internal cone, the said bushing body being formed integrally with the clamping nut (9).

7. Fastening device according to at least one of the preceding claims, characterized in that the shank of the fastening bolt (4) is formed with a toothing (16), knurling or the like.

## Revendications

1. Dispositif de fixation, en particulier pour la fixation d'un pied de rail (1) d'un rail de toit s'appuyant sur le panneau de toit (3) d'un véhicule à moteur en intercalant un support élastique (2), comprenant un boulon de fixation (4) présentant aux deux extrémités un filetage extérieur, lequel boulon s'engage avec une partie d'extrémité dans un alésage fileté (5) formé dans le pied de rail (1) et traverse, avec l'autre partie d'extrémité prévue pour y visser un écrou de serrage (9), un alésage (6) dans le panneau de toit (3) et un alésage (7) dans un arceau (8) du véhicule à moteur, recouvert par le panneau de toit (3), un élément de compensation en hauteur (10) s'appuyant sur l'arceau, passant à travers l'alésage (6) dans le panneau de toit (3) étant poussé par le boulon de fixation (4), lequel élément présente une saillie tubulaire (13) pour entourer le boulon de fixation (4), caractérisé en ce que l'élément de compensation en hauteur (10) est formé avec des pieds de montage (11) s'appuyant sur l'arceau (8) et au moins un pied de support (14) plus court par rapport à ceux-ci, en ce qu'un moyen de serrage est disposé sur la saillie tubulaire (13) afin de fixer l'élément de compensation en hauteur (10) contre tout mouvement axial sur le boulon de fixation (4), en ce que les pieds de montage (11) sont formés de telle sorte ou sont disposés de telle sorte sur l'élément de compensation en hauteur (10) qu'ils peuvent s'écarter lors du vissage de l'écrou de serrage (9) et donc du rapprochement résultant de l'au moins un pied de support (14) contre l'arceau (8), et en ce que la différence de hauteur entre les pieds de montage (11) et l'au moins un pied de support (14) correspond à la dimension nécessaire entre le panneau de toit (3) et le pied de rail (1) pour la précontrainte du support élastique (2).

2. Dispositif de fixation selon la revendication 1, caractérisé en ce que les pieds de montage (11) s'étendent en biais vers l'extérieur en direction de l'arceau (8) sur l'élément de compensation en hauteur (10).

3. Dispositif de fixation selon au moins l'une des revendications précédentes, caractérisé en ce que l'au moins un pied de support (14) présente une forme de douille entourant la saillie tubulaire (13) avec un jeu.

4. Dispositif de fixation selon au moins l'une des revendications précédentes, caractérisé en ce que la saillie tubulaire (13) présente au moins un évidement axial sortant librement (12).

5. Dispositif de fixation selon au moins l'une des revendications précédentes, caractérisé en ce que la saillie tubulaire (13) est formée avec un filetage externe pour le vissage d'un écrou fileté (15) servant de moyen de serrage.

6. Dispositif de fixation selon au moins l'une des revendications précédentes, caractérisé en ce que la saillie tubulaire (13) s'étend coniquement vers l'extrémité libre et est reçue par un corps de douille (20) de conicité interne correspondante formé d'une pièce avec l'écrou de serrage (9).

7. Dispositif de fixation selon au moins l'une des revendications précédentes, caractérisé en ce que la tige du boulon de fixation (4) est formée avec une denture (16), une bordure, ou similaire.
